# EUROPEAN PATENT APPLICATION

(11) **EP 4 807 038 A1**
(43) Date of publication of application: **16.09.2026**
(21) Application number: 24889221.8
(22) Date of filing: 15.04.2024
(51) Int. Cl.: C23C 2/02, C23C 2/06, C23C 2/40, C23C 2/28, C22C 38/02, C22C 38/06, C22C 38/12, C22C 38/14, C21D 9/46

(54) **ULTRA-HIGH STRENGTH GALVANIZED STEEL SHEET HAVING EXCELLENT WELDABILITY AND MANUFACTURING METHOD THEREFOR**

(30) Priority: 09.11.2023 KR 20230154381
(71) Applicant: Hyundai Steel Company, Incheon 22525 (KR)
(72) Inventor: LA, Joung Hyun, Incheon 22525 (KR); PARK, Min Suh, Incheon 22525 (KR); HAN, Seong Kyung, Incheon 22525 (KR); YOOK, Wan, Incheon 22525 (KR); KANG, Jae Wook, Incheon 22525 (KR)
(74) Representative: Viering, Jentschura & Partner mbB Patent- und Rechtsanwälte
(86) International application number: PCT/KR2024/095729
(87) International publication number: WO 2025/101035

(57) **Abstract**

Provided are an ultra-high-strength galvanized steel sheet having excellent weldability and a method of producing the same. According to an embodiment of the present invention, the ultra-high-strength galvanized steel sheet comprises a steel sheet base material comprising, in weight percent, carbon (C): 0.1% to 0.3%, silicon (Si): 1.0% to 2.0%, manganese (Mn): 2.5% to 3.5%, aluminum (Al): 0.05% or less (including 0%), chromium (Cr): 1.0% or less (including 0%), molybdenum (Mo): 0.2% or less (including 0%), titanium+niobium+vanadium (Ti+Nb+V): 0.05% or less (including 0%), phosphorus (P), sulfur (S), nitrogen (N), and the balance being iron (Fe) and unavoidable impurities, an iron coating layer formed on a surface of the steel sheet base material; and a hot-dip galvanized layer formed on a surface of the iron coating layer; wherein formation of oxides at an interface between the iron coating layer and the hot-dip galvanized layer is suppressed by forming internal oxides at an interface between the steel sheet base material and the iron coating layer, and the internal oxides are of a spherical shape.

## Description

### TECHNICAL FIELD

The technical concept of the present invention relates to a steel sheet, and more particularly, to an ultra-high-strength galvanized steel sheet having excellent weldability capable of preventing the initiation and propagation of cracks caused by liquid metal embrittlement (LME) during a spot-welding process, and a method of producing the same.

### BACKGROUND ART

The automotive industry is focusing on improving fuel efficiency and reducing weight in response to the demands of the times, such as resource depletion, rapid progression of global warming, and high oil prices, and is further requiring ultra-high-strength steel sheets as regulations on passenger safety are gradually increasing. In addition, various improvements are being demanded for galvanized steel sheets that have excellent sacrificial corrosion protection and, when exposed to a corrosive environment, allow zinc, which has a low electric potential, to be preferentially dissolved to prevent corrosion of the steel sheet. For example, there is a growing demand to address the problem of liquid metal embrittlement (LME), in which the galvanized layer melts during spot welding on an automotive assembly line and molten zinc penetrates toward the interface of retained austenite present on the surface layer of the base steel, causing embrittlement.

In the case of third-generation plated steel materials, it is difficult to secure weld strength due to cracks generated by the liquid metal embrittlement (LME) phenomenon during the spot-welding process. In particular, cracks generated by the liquid metal embrittlement (LME) phenomenon as described above are caused by bare spot defects or coating delamination, which are attributable to the formation of surface oxides by elements such as manganese (Mn), silicon (Si), aluminum (Al), chromium (Cr), and boron (B) that are added to secure the mechanical properties of the steel sheet during annealing immediately before the plating is applied.

To address these problems, technologies such as dew point control and decarburized layer formation have been developed to cause oxides to form internally rather than on the surface. However, there is a problem in that internal oxides with long grain boundary lengths, which are inevitably generated by these technologies, can only suppress the propagation of cracks and may instead act as initiation sites for cracks, making it impossible to fundamentally suppress the initiation of cracks.

Korean Patent Application No. 10-2019-0151089 is cited as a prior art document.

### DETAILED DESCRIPTION OF THE INVENTION

### TECHNICAL PROBLEM

The technical problem to be achieved by the technical concept of the present invention is to provide an ultra-high-strength galvanized steel sheet having excellent weldability and a method of manufacturing the same, which can minimize bare spot defects and coating delamination by controlling the internal oxidation morphology at grain boundaries.

However, such problems are illustrative, and the technical concept of the present invention is not limited thereto.

### TECHNICAL SOLUTION

According to one aspect of the present invention, there is provided an ultra-high-strength galvanized steel sheet having excellent surface characteristics and excellent weldability, and a method of manufacturing the same.

According to one embodiment of the present invention, the ultra-high-strength galvanized steel sheet comprises: a steel sheet base material comprising, in weight percent, carbon (C): 0.1% to 0.3%, silicon (Si): 1.0% to 2.0%, manganese (Mn): 2.5% to 3.5%, aluminum (Al): at most 0.05% (including 0%), chromium (Cr): at most 1.0% (including 0%), molybdenum (Mo): at most 0.2% (including 0%), titanium+niobium+vanadium (Ti+Nb+V): at most 0.05% (including 0%), and the balance being iron (Fe) and unavoidable impurities; an iron coating layer formed on a surface of the steel sheet base material; and a hot-dip galvanized layer formed on a surface of the iron coating layer, wherein internal oxides are formed at an interface between the steel sheet base material and the iron coating layer so as to suppress formation of oxides at an interface between the iron coating layer and the hot-dip galvanized layer, and wherein the internal oxides are of a spherical morphology.

In addition, the internal oxides may comprise, among all internal oxides, spherical internal oxides having a major axis/minor axis ratio of 3.0 or less at a volume fraction of 80% or more.

In addition, the iron coating layer may comprise a clean zone, extending from the interface with the hot-dip galvanized layer, in which no oxides are formed.

In addition, the ultra-high-strength galvanized steel sheet may satisfy a yield strength (YP) of 850 MPa to 1070 MPa, a tensile strength (TS) of 1180 MPa or more, and an elongation (T.EL) of 14% or more, and may comprise a mixed microstructure in which ferrite, retained austenite, and a mixture of hard phase martensite/tempered martensite are mixed, wherein a fraction of the ferrite ranges from 10% to 20%, and a fraction of the retained austenite ranges from 5% to 20%.

In addition, the steel sheet base material may further comprise, in ppm, at least one of boron (B): at most 30 (including 0), phosphorus (P): at most 200 (including 0), sulfur (S): at most 50 (including 0), and nitrogen (N): at most 60 (including 0).

According to one embodiment of the present invention, the method of manufacturing the ultra-high-strength galvanized steel sheet comprises manufacturing a hot-rolled steel sheet using a steel sheet base material comprising, in weight percent, carbon (C): 0.1% to 0.3%, silicon (Si): 1.0% to 2.0%, manganese (Mn): 2.5% to 3.5%, aluminum (Al): at most 0.05% (including 0%), chromium (Cr): at most 1.0% (including 0%), molybdenum (Mo): at most 0.2% (including 0%), titanium+niobium+vanadium (Ti+Nb+V): at most 0.05% (including 0%), and the balance being iron (Fe) and unavoidable impurities, cold rolling the hot-rolled steel sheet to manufacture a cold-rolled steel sheet, forming an iron coating layer on a surface of the cold-rolled steel sheet, performing an annealing heat treatment on the cold-rolled steel sheet, and immersing the annealing heat-treated cold-rolled steel sheet in a hot-dip galvanizing bath to form a hot-dip galvanized layer on a surface of the iron coating layer, thereby manufacturing a hot-dip galvanized steel sheet, wherein the step of forming the iron coating layer on the surface of the cold-rolled steel sheet comprises: an oxidation step in which the cold-rolled steel sheet is exposed to an oxidizing atmosphere containing an oxygen content so as to form an iron oxide layer on the surface of the cold-rolled steel sheet, and a reduction step in which the cold-rolled steel sheet having the iron oxide layer formed on its surface is exposed to a reducing atmosphere containing H₂ so as to reduce the iron oxide layer, wherein the oxidation step comprises a step in which internal oxides are formed at an interface between the steel sheet base material and the iron oxide layer, and wherein the internal oxides are of a spherical morphology.

In addition, a dew point of H₂O generated by combination of O produced by reduction of the iron oxide layer and H₂ in the reducing atmosphere may be formed at -10°C to 0°C.

In addition, in the oxidation step, an oxidation zone having an oxidation temperature of 400°C to 900°C is established, and the cold-rolled steel sheet is exposed to an oxidizing atmosphere containing an oxygen content of 0.5 vol% to 5.0 vol% for 10 seconds to 120 seconds; and in the reduction step, a reduction zone having a reduction temperature of 750°C to 900°C is established, and the cold-rolled steel sheet having the iron oxide layer formed on its surface is exposed to a reducing atmosphere containing an H₂ content of 3 vol% or more for 30 seconds to 200 seconds.

In addition, the internal oxides may comprise, among all internal oxides, spherical internal oxides having a major axis/minor axis ratio of 3.0 or less at a volume fraction of 80% or more.

In addition, the iron coating layer may comprise a clean zone, extending from the interface with the hot-dip galvanized layer, in which no oxides are formed.

In addition, the ultra-high-strength galvanized steel sheet having excellent weldability manufactured by the manufacturing method

may satisfy a yield strength (YP) of 850 MPa to 1070 MPa, a tensile strength (TS) of 1180 MPa or more, and an elongation (T.EL) of 14% or more, and may comprise a mixed microstructure in which ferrite, retained austenite, and a mixture of hard phase martensite/tempered martensite are mixed, wherein a fraction of the ferrite ranges from 10% to 20%, and a fraction of the retained austenite ranges from 5% to 20%.

In addition, the steel sheet base material may further comprise, in ppm, at least one of boron (B): 30 or less (including 0), phosphorus (P): 200 or less (including 0), sulfur (S): 50 or less (including 0), and nitrogen (N): 60 or less (including 0).

In addition, the step of manufacturing the cold-rolled steel sheet may comprise a softening heat treatment step performed in a temperature range of 500°C to 700°C.

In addition, the annealing heat treatment step may be performed by heating at a heating rate of 1°C/second to 5°C/second and maintaining at a temperature of 820°C to 900°C for 40 seconds to 200 seconds.

In addition, the method may further comprise a step of alloying heat-treating the hot-dip galvanized steel sheet to manufacture a galvannealed steel sheet.

### ADVANTAGEOUS EFFECTS

According to the technical concept of the present invention, the ultra-high-strength galvanized steel sheet can prevent diffusion of oxide-forming substances to the surface to be plated, thereby suppressing formation of surface oxides and preventing propagation of cracks caused by liquid metal embrittlement (LME) during spot-welding.

In addition, according to the technical concept of the present invention, the ultra-high-strength galvanized steel sheet forms internal oxides not at grain boundaries but in a spherical morphology at the interface between the steel sheet base material and the iron coating layer, thereby preventing the very initiation of cracks caused by liquid metal embrittlement (LME) during spot welding, and thus providing excellent plating quality.

The effects of the present invention described above are set forth by way of example, and the scope of the present invention is not limited by such effects.

### DESCRIPTION OF THE DRAWINGS

Fig. 1 is a schematic diagram illustrating the function of the iron coating layer of an ultra-high-strength galvanized steel sheet according to an embodiment of the present invention.
Fig. 2 is a process flow diagram illustrating a method of producing an ultra-high-strength galvanized steel sheet according to an embodiment of the present invention.
Fig. 3 is a photograph showing the shape of internal oxides in an ultra-high-strength galvanized steel sheet according to an embodiment of the present invention.
Fig. 4 is a photograph showing whether or not cracks caused by liquid metal embrittlement (LME) occur in an ultra-high-strength galvanized steel sheet according to an embodiment of the present invention.
Fig. 5 is a photograph showing the pattern of crack formation caused by liquid metal embrittlement (LME) in a galvanized steel sheet according to a comparative example of the present invention.

### MODE OF THE INVENTION

Hereinafter, preferred embodiments of the present invention will be described in detail with reference to the accompanying drawings. The embodiments of the present invention are provided to more completely explain the technical concept of the present invention to those skilled in the art, and the following embodiments may be modified in various other forms, and the scope of the technical concept of the present invention is not limited to the following embodiments. Rather, these embodiments are provided to make the present disclosure more faithful and complete, and to fully convey the technical concept of the present invention to those skilled in the art. In the present specification, the same reference numerals denote the same elements throughout. Furthermore, various elements and regions in the drawings are schematically illustrated. Accordingly, the technical concept of the present invention is not limited by the relative sizes or spacings depicted in the accompanying drawings.

The technical concept of the present invention is to provide an ultra-high-strength galvanized steel sheet having excellent surface properties capable of suppressing the formation of surface oxides to prevent bare spot defects or coating delamination, and a method of manufacturing the same.

When silicon is contained in a large amount during the process of forming an ultra-high-strength galvanized steel sheet, silicon oxide is formed on the surface of the steel material, thereby reducing zinc wettability on the surface of the steel material. When zinc wettability is low in this manner, there is a high likelihood that plating defects such as bare spots or coating delamination will occur after galvanizing.

Various studies have been conducted to prevent the formation of silicon oxide on the surface of steel materials.

The first is a furnace dew point control method, in which the dew point inside the furnace is raised during the annealing heat treatment process to fix silicon as an oxide inside the steel material, thereby suppressing the surface diffusion of silicon. However, the increase in dew point tends to cause deterioration of the annealing heat treatment structure due to accelerated oxidation, and in steel materials with high manganese content, the formation of manganese oxide may cause surface defects in the steel material.

The second is a nickel layer formation method, in which a trace amount of nickel is electroplated onto the surface of the steel material prior to annealing heat treatment to suppress the surface diffusion of silicon during annealing heat treatment. However, since expensive nickel is applied, the production cost increases, and as nickel regulations in Europe and China are intensifying due to the harmful effects of nickel on the human body, there are limitations on the additional application of nickel to steel materials.

The ultra-high-strength galvanized steel sheet according to the technical concept of the present invention suppresses the surface diffusion of silicon during annealing heat treatment by forming a thin iron coating layer on the surface of the steel sheet prior to annealing heat treatment. At this time, the iron coating layer may be formed through oxidation and reduction steps.

More specifically, a high oxidizing atmosphere is provided to generate an iron oxide layer on the surface of the steel sheet to prevent silicon from diffusing to the surface of the steel sheet, and thereafter the iron oxide layer is reduced through a reduction process to form a clean iron coating layer on the surface layer.

In this case, by controlling the content of elements that readily form oxides, such as silicon, aluminum, and chromium, and by controlling the process conditions for annealing heat treatment, silicon oxide, aluminum oxide, or chromium oxide can be formed exclusively inside the steel sheet, and diffusion to the surface on which zinc is plated can be suppressed, thereby improving the plating quality of the steel sheet.

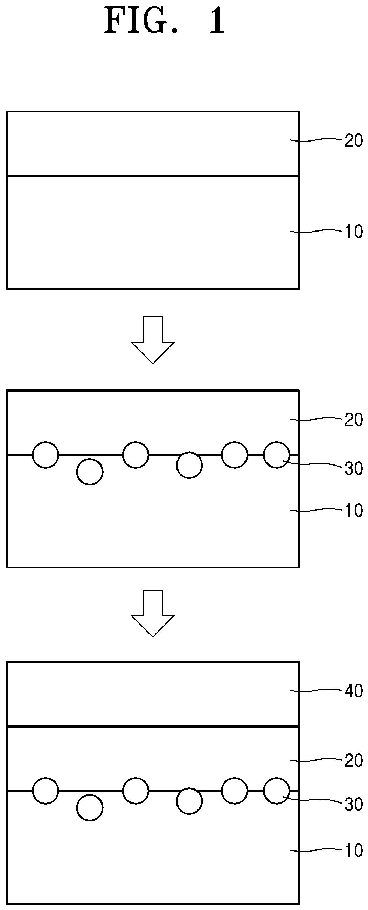

FIG. 1 is a schematic diagram illustrating the function of the iron coating layer of an ultra-high-strength galvanized steel sheet according to one embodiment of the present invention.

Referring to FIG. 1, an iron coating layer 20 is formed on a steel sheet base material 10 using oxidation and reduction steps to be described in detail below. At this time, during the process of forming the iron coating layer 20, an iron oxide layer is formed through the oxidation step, and simultaneously, internal oxides 30 may be formed at the interface region between the steel sheet base material 10 and the iron oxide layer. Thereafter, that is, through the reduction step, the oxygen contained in the iron oxide layer is removed, so that the iron coating layer 20 may be formed as a pure iron coating layer 20.

The steel sheet base material 10 may contain at least one of silicon, aluminum, and chromium in order to secure desired physical properties. The iron coating layer 20 may be composed of pure iron and may also contain oxygen.

Subsequently, the steel sheet base material 10 on which the iron coating layer 20 has been formed is subjected to annealing heat treatment. By the annealing heat treatment of the iron coating layer 20, the oxygen contained in the iron coating layer 20 preferentially reacts with plating-inhibiting elements such as silicon, aluminum, and chromium contained in the steel sheet base material 10 to additionally form internal oxides 30. As the plating-inhibiting elements are diffusion-controlled, internal oxides 30 are formed in a concentrated manner at the interface between the steel sheet base material 10 and the iron coating layer 20, and diffusion of the plating-inhibiting elements to the surface of the iron coating layer 20 is suppressed. Since the oxygen in the iron coating layer 20 forms the internal oxides 30, the iron is reduced, thereby forming a clean zone from the surface in which the purity of iron can be further increased.

The internal oxides 30 may include those having a spherical shape. In the present invention, "spherical" may mean not only a perfect sphere but also a partially distorted sphere and an ellipse having a major axis/minor axis ratio of no greater than a certain value.

In the case of cold-rolled steel sheet annealing by a conventional internal oxidation method in an annealing furnace, oxygen inside the annealing furnace is introduced through the surface of the annealed material to form internal oxides. When internal oxidation occurs by oxygen supplied from the outside in this manner, internal oxides are mainly formed in a linear pattern along grain boundaries. However, in the present invention, since the iron coating layer already contains a certain amount or more of oxygen due to the oxygen present inside the annealed material, internal oxidation occurs as oxygen flows in along the surface area of the interface between the steel sheet base material 10 and the iron coating layer 20. That is, the internal oxides 30 are not formed along grain boundaries but exist within grains, and have a spherical shape rather than a linear shape.

At this time, the internal oxides 30 may contain, among all internal oxides, spherical internal oxides having a major axis/minor axis ratio of 3.0 or less at a volume fraction of 80% or more. When calculating the volume fraction, in the case of formation of segmented oxides, each oxide shall be treated as a separate oxide for calculation purposes.

In addition, 90% or more by volume fraction of the internal oxides 30 may be distributed within a depth of 10 µm from the surface of the steel sheet base material 10.

Subsequently, a hot-dip galvanized layer 40 is formed on the iron coating layer 20. As described above, since the internal oxides 30 are not exposed to the surface of the iron coating layer 20, the plating quality at the interface between the iron coating layer 20 and the hot-dip galvanized layer 40 is excellent. That is, bare spot defects, coating delamination defects, or alloying defects can be prevented.

Hereinafter, an ultra-high-strength galvanized steel sheet, which is one aspect of the present invention, having excellent surface properties capable of suppressing the formation of surface oxides to prevent bare spot defects or coating delamination, will be described.

### ULTRA-HIGH-STRENGTH GALVANIZED STEEL SHEET

The ultra-high-strength galvanized steel sheet, which is one aspect of the present invention, may comprise: a steel sheet base material comprising, in weight percent, carbon (C): 0.1% to 0.3%, silicon (Si): 1.0% to 2.0%, manganese (Mn): 2.5% to 3.5%, aluminum (Al): at most 0.05% (including 0%), chromium (Cr): at most 1.0% (including 0%), molybdenum (Mo): at most 0.2% (including 0%), titanium+niobium+vanadium (Ti+Nb+V): at most 0.05% (including 0%), and the balance being iron (Fe) and unavoidable impurities; an iron coating layer formed on the surface of the steel sheet base material; and a hot-dip galvanized layer formed on the surface of the iron coating layer. In addition, by forming internal oxides at the interface between the steel sheet base material and the iron coating layer, the formation of oxides at the interface between the iron coating layer and the hot-dip galvanized layer is suppressed, wherein the internal oxides include those having a spherical shape.

The steel sheet base material of the ultra-high-strength galvanized steel sheet may further comprise, in ppm, one or more of: boron (B): at most 30 (including 0), phosphorus (P): at most 200 (including 0), sulfur (S): at most 50 (including 0), and nitrogen (N): at most 60 (including 0).

The steel sheet base material may be a cold-rolled steel sheet formed by cold rolling a hot-rolled steel sheet.

The iron coating layer may have a clean zone adjacent to the interface with the hot-dip galvanized layer or the galvannealed layer, in which no formed oxides are present.

The hot-dip galvanized layer and the galvannealed layer may contain 50 wt% or more of zinc (Zn). Additionally, aluminum (Al) and unavoidable impurities may be further included, and since the content of aluminum (Al) in the hot-dip galvanized layer varies depending on the steel grade and the composition of the galvanizing bath, the present invention may not limit this to a specific range.

Hereinafter, the role and content of each component included in the ultra-high-strength galvanized steel sheet according to the present invention will be described as follows. In this case, the content of each component element is expressed in weight percent.

### Carbon (C): 0.1% to 0.3%

Carbon is added to stabilize retained austenite and to secure strength. When the carbon content is less than 0.1%, it may be difficult to secure strength. When the carbon content exceeds 0.3%, weldability may deteriorate. Therefore, it is preferable to add carbon at 0.1% to 0.3% of the total weight of the steel sheet.

### Silicon (Si): 1.0% to 2.0%

Silicon is added as a deoxidizer to remove oxygen from the steel sheet during steelmaking, and is an element that suppresses the precipitation of carbides in ferrite and promotes the diffusion of carbon in ferrite into austenite, thereby contributing to the stabilization of retained austenite. When the silicon content is less than 1.0%, the effect of silicon addition is insufficient. When the silicon content exceeds 2.0%, the rolling load increases during rolling, excessive formation of red scale occurs after hot rolling, and plating quality may deteriorate. Therefore, it is preferable to add silicon at 1.0% to 2.0% of the total weight of the steel sheet.

### Manganese (Mn): 2.5% to 3.5%

Manganese is added to promote the formation and stabilization of retained austenite, to exert a ferrite transformation suppression effect during cooling, and to sufficiently secure austenite to ensure strength and ductility. However, since manganese combines with sulfur to form MnS precipitates, it is necessary to control the content in order to optimize the manganese segregation band. When the manganese content is less than 2.5%, austenite may not be sufficiently secured, and the desired strength and ductility may not be provided. When the manganese content exceeds 3.5%, band formation due to segregation induced in the slab and hot rolling processes may become excessive, deteriorating physical properties, and in particular, formability may deteriorate. Therefore, it is preferable to add manganese at 2.5% to 3.5% of the total weight of the steel sheet.

### Aluminum (Al): at most 0.05% (including 0%)

Aluminum contributes to the stabilization of retained austenite by suppressing the formation of carbides in ferrite. When the aluminum content exceeds 0.05%, it is difficult to manufacture a sound slab through reaction with mold flux during casting, and surface oxides may be formed, thereby deteriorating plating properties. Therefore, it is preferable to add aluminum at 0.05% or less (including 0%) of the total weight of the steel sheet.

### Chromium (Cr): at most 1.0% (including 0%)

Chromium is an element with high hardenability, and is added to suppress the formation of ferrite and to increase strength through transformation strengthening. When the chromium content exceeds 1.0%, toughness may deteriorate, surface oxides may be formed thereby deteriorating plating properties, and production costs may increase. Therefore, it is preferable to add chromium at 1.0% or less (including 0%) of the total weight of the steel material.

### Molybdenum (Mo): at most 0.2% (including 0%)

Molybdenum is effective in securing strength because it greatly contributes to strength improvement while not reducing the wettability of molten metals such as zinc. When the molybdenum content exceeds 0.2%, no further significant improvement in effect is obtained, and an increase in production cost may be incurred. Therefore, it is preferable to add molybdenum at 0.2% or less (including 0%) of the total weight of the steel material.

### Titanium+Niobium+Vanadium (Ti+Nb+V): at most 0.05% (including 0%)

Titanium, niobium, and vanadium can achieve high strength and excellent impact toughness by suppressing grain growth of austenite during heat treatment. When the total content of titanium, niobium, and vanadium exceeds 0.05%, a decrease in the carbon concentration and strength of martensite due to carbide precipitation may occur, and precipitates or crystallized substances may coarsen, resulting in deterioration of elongation, low-temperature toughness, and bendability.

### Boron (B): at most 30 ppm (including 0)

Boron can secure low-temperature phase microstructures such as martensite and bainite, and can secure hardenability and high strength. When the boron content exceeds 30 ppm, grain boundary embrittlement of the hard phase may occur, making it difficult to secure high toughness and bendability, and boron may concentrate on the surface of the annealed material, significantly deteriorating surface quality. Therefore, it is preferable to add boron at 30 ppm or less (including 0) of the total weight of the steel sheet.

### Phosphorus (P): at most 200 ppm (including 0)

Phosphorus partially contributes to strength improvement and spot-welding property improvement, but it reduces toughness and forms not only center segregation but also micro-segregation, which may have an adverse effect on material properties. Therefore, the lower the phosphorus content, the better. Accordingly, it is preferable to limit phosphorus to 200 ppm or less (including 0) of the total weight of the steel sheet.

### Sulfur (S): at most 50 ppm (including 0)

Sulfur, together with phosphorus, is an element inevitably contained during the manufacture of steel. It controls cleanliness and elongated inclusions, forms nonmetallic inclusions such as MnS, and as a low-melting-point element, has a high tendency for grain boundary segregation, thereby reducing toughness. When the sulfur content exceeds 50 ppm, the toughness of the steel sheet base material and weld zone may be significantly reduced, and MnS may be excessively formed. Therefore, it is preferable to limit sulfur to 50 ppm or less (including 0) of the total weight of the steel sheet.

### Nitrogen (N): at most 60 ppm (including 0)

Nitrogen, together with sulfur and phosphorus, is an element inevitably contained during the manufacture of steel. When the nitrogen content exceeds 60 ppm, the toughness of the steel sheet base material and weld zone may deteriorate. Therefore, it is preferable to limit nitrogen to 60 ppm or less (including 0) of the total weight of the steel sheet.

The remaining component of the steel sheet is iron (Fe). However, since unintended impurities from raw materials or the surrounding environment may inevitably be incorporated during a typical manufacturing process, these cannot be excluded. Since these impurities are known to any person skilled in the art of typical manufacturing processes, all such details are not specifically mentioned in the present specification.

The ultra-high-strength galvanized steel sheet formed by controlling the specific components and their content ranges of the alloy composition described above and through the manufacturing method according to the technical concept of the present invention described below may satisfy a yield strength (YP): 850 to 1070 MPa, a tensile strength (TS): 1180 MPa or more, and an elongation (T.EL): 14% or more. In addition, the steel sheet may comprise a mixed microstructure in which ferrite, retained austenite, and a mixture of hard phase martensite/tempered martensite are mixed, wherein the fraction of the ferrite is in the range of 10% to 20%, and the fraction of the retained austenite is in the range of 5% to 20%.

Hereinafter, a method of manufacturing an ultra-high-strength galvanized steel sheet according to the technical concept of the present invention will be described.

### METHOD OF MANUFACTURING AN ULTRA-HIGH-STRENGTH GALVANIZED STEEL SHEET

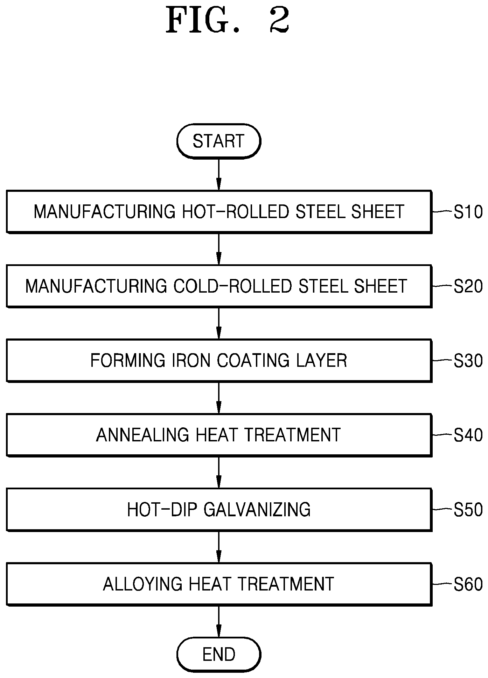

FIG. 2 is a process flow diagram illustrating a method of manufacturing an ultra-high-strength galvanized steel sheet according to one embodiment of the present invention.

In the method of manufacturing an ultra-high-strength galvanized steel sheet according to the present invention, the semi-finished product subject to the hot rolling process may be, for example, a slab. The slab in a semi-finished state can be obtained by obtaining molten steel of a predetermined composition through a steelmaking process and then through a continuous casting process.

Referring to FIG. 2, the method of manufacturing the ultra-high-strength galvanized steel sheet comprises a hot-rolled steel sheet manufacturing step (S10), a cold-rolled steel sheet manufacturing step (S20), an iron coating layer forming step (S30), an annealing heat treatment step (S40), a hot-dip galvanizing step (S50), and an alloying heat treatment step (S60).

Specifically, the method of manufacturing the ultra-high-strength galvanized steel sheet comprises: a step (S10) of manufacturing a hot-rolled steel sheet using a steel sheet base material comprising, in weight percent, carbon (C): 0.1% to 0.3%, silicon (Si): 1.0% to 2.0%, manganese (Mn): 2.5% to 3.5%, aluminum (Al): at most 0.05% (including 0%), titanium+niobium+vanadium (Ti+Nb+V): at most 0.05% (including 0%), and the balance being iron (Fe) and unavoidable impurities, a step (S20) of cold rolling the hot-rolled steel sheet to manufacture a cold-rolled steel sheet, a step (S30) of forming an iron coating layer on the surface of the cold-rolled steel sheet, a step (S40) of annealing heat treating the cold-rolled steel sheet by maintaining it at a temperature of 820°C to 900°C for 40 seconds to 200 seconds, and a step (S50) of immersing the annealing heat treated cold-rolled steel sheet in a hot-dip galvanizing bath to form a hot-dip galvanized layer on the surface of the iron coating layer, thereby manufacturing a hot-dip galvanized steel sheet.

In addition, the step (S30) of forming an iron coating layer on the surface of the cold-rolled steel sheet may comprise an oxidation step in which the cold-rolled steel sheet is exposed to an oxidizing atmosphere containing an oxygen content to form an iron oxide layer on the surface of the cold-rolled steel sheet, and a reduction step in which the cold-rolled steel sheet having the iron oxide layer formed on its surface is exposed to a reducing atmosphere containing H2 to reduce the iron oxide layer.

In addition, the method of manufacturing the ultra-high-strength galvanized steel sheet may further comprise a step (S60) of alloying heat treating the hot-dip galvanized steel sheet to manufacture a galvannealed steel sheet.

The steel sheet may further comprise, in ppm, one or more of: boron (B): at most 30 (including 0), phosphorus (P): at most 200 (including 0), sulfur (S): at most 50 (including 0), and nitrogen (N): at most 60 (including 0).

Hereinafter, the method of manufacturing an ultra-high-strength galvanized steel sheet according to the present invention will be described in detail step by step.

### HOT-ROLLED STEEL SHEET MANUFACTURING STEP (S10)

The hot-rolled steel sheet manufacturing step (S10) may be performed as follows. A steel sheet having the alloy composition described above is prepared, and the steel sheet is reheated at, for example, a slab reheating temperature (SRT) of 1,150°C to 1,250°C. Through this reheating, re-dissolution of components segregated during casting and re-dissolution of precipitates may occur. When the reheating temperature is less than 1,150°C, the hot rolling load may increase sharply, precipitates may not be sufficiently re-dissolved, causing a decrease in precipitates in processes subsequent to hot rolling, and homogenization of alloying elements may not be achieved. When the reheating temperature exceeds 1,250°C, the amount of surface scale may increase, leading to material loss, and energy may be wasted.

After the reheating, hot rolling is performed by a conventional method, and hot finish rolling is performed at, for example, a finish delivery temperature (FDT) of 850°C to 1000°C to manufacture a hot-rolled steel sheet. The dispersion of uniform precipitates may be improved by the hot rolling. When the finish rolling delivery temperature is less than 850°C, it is difficult to secure the workability of the steel sheet due to the occurrence of a mixed microstructure caused by rolling in the two-phase region, and workability may deteriorate due to microstructural non-uniformity. When the finish rolling delivery temperature exceeds 1000°C, there is a concern that the quality of the steel sheet may deteriorate due to increased brittleness of the steel sheet along with a large amount of cooling and the occurrence of surface scale on the steel sheet.

Subsequently, the hot-rolled steel sheet is cooled to, for example, a coiling temperature of 500°C or higher. The cooling may be either air cooling or water cooling, and may be performed by a front-end rapid quenching method. The cooling may be performed at, for example, a cooling rate of 10°C/s to 30°C/s. It is preferable to cool to the coiling temperature.

Subsequently, the hot-rolled steel sheet is coiled. The coiling step is performed at, for example, a coiling temperature (CT) of 500°C or higher, for example, 500°C to 700°C. When the coiling temperature is less than 500°C, bainite or martensite microstructure is formed, making subsequent cold rolling difficult, and workability may deteriorate due to an increase in strength and a decrease in ductility caused by grain refinement. When the coiling temperature exceeds 700°C, oxides may be excessively generated on the surface of the steel sheet, causing defects, precipitates may coarsen, and the final microstructure may coarsen, resulting in deterioration of strength and workability.

In addition, in order to secure cold rolling properties, an additional heat treatment may be selectively performed on the coiled hot-rolled steel sheet. At this time, the heat treatment is generally performed in the form of a coiled coil, and the heat treatment may be performed in an atmosphere containing nitrogen and hydrogen, or nitrogen or hydrogen alone, to prevent additional oxidation.

### COLD-ROLLED STEEL SHEET MANUFACTURING STEP (S20)

The cold-rolled steel sheet manufacturing step (S20) may be performed as follows. Prior to pickling treatment in which the hot-rolled steel sheet is cleaned with acid, a softening heat treatment performed in a temperature range of 500°C to 700°C is carried out. When the softening heat treatment temperature is less than 500°C, the degree of softening of the steel sheet may be insignificant, making subsequent processing difficult. When the softening heat treatment temperature exceeds 700°C, there is a problem that the hardness of the steel sheet may be excessively reduced.

Subsequently, after pickling treatment in which the softening heat treated hot-rolled steel sheet is cleaned with acid, the pickled hot-rolled steel sheet is cold rolled at, for example, an average reduction ratio of 40% to 60% to form a cold-rolled steel sheet. The higher the average reduction ratio, the greater the effect of improving formability due to microstructure refinement. When the average reduction ratio is less than 40%, it is difficult to obtain a uniform microstructure. When the average reduction ratio exceeds 60%, the rolling roll force increases, which may increase the process load.

### IRON COATING LAYER FORMING STEP (S30)

In the iron coating layer forming step (S30), an iron coating layer is formed on the surface of the cold-rolled steel sheet, and the formation of the iron coating layer is carried out by an oxidation step in which the cold-rolled steel sheet is exposed to an oxidizing atmosphere containing an oxygen content to form an iron oxide layer on the surface of the cold-rolled steel sheet, and a reduction step in which the cold-rolled steel sheet having the iron oxide layer formed on its surface is exposed to a reducing atmosphere containing H2 to reduce the iron oxide layer.

In the oxidation step, a high oxidizing atmosphere is provided to generate an iron oxide layer, that is, an iron oxide layer, on the surface of the steel sheet to prevent silicon from diffusing to the surface of the steel sheet. In addition, simultaneously with the generation of the iron oxide layer, internal oxides having a mostly spherical shape can be formed at the interface between the steel sheet base material and the iron coating layer, thereby suppressing the formation of oxides at the interface between the iron coating layer and the hot-dip galvanized layer.

More specifically, the oxidation step may be performed by constituting an oxidation zone having an oxidation temperature of 400°C to 900°C, and exposing the cold-rolled steel sheet to an oxidizing atmosphere containing an oxygen concentration of 0.5 vol% to 5.0 vol% for 10 seconds to 120 seconds.

At this time, when the oxidation temperature is less than 400°C, the amount of oxidation for forming the iron oxide layer is insufficient, and heat treatment exceeding 900°C is unnecessary. In addition, when the oxygen concentration is less than 0.5 vol%, the amount of oxidation for forming the iron oxide layer is insufficient, and when it exceeds 5.0 vol%, there is a problem that unnecessary oxide formation may occur due to excessive oxidation. Furthermore, when the oxidation time is less than 10 seconds, the amount of oxidation for forming the iron oxide layer is insufficient, and when it exceeds 120 seconds, there is a problem that productivity may rather decrease due to excessive time required.

Thereafter, through the reduction step, the iron oxide layer is reduced to form a clean iron coating layer on the surface layer. More specifically, the reduction step may be performed by constituting a reduction zone having a reduction temperature of 750°C to 900°C, and exposing the cold-rolled steel sheet having the iron oxide layer formed on its surface to a reducing atmosphere containing an H2 content of 3 vol% or more for 30 seconds to 200 seconds.

At this time, when the reduction temperature is less than 750°C, the iron oxide layer cannot be efficiently reduced to form the iron coating layer, and heat treatment exceeding 900°C is unnecessary. In addition, when the hydrogen content is less than 3 vol%, there is a problem that the amount of reduction for reducing the iron oxide layer to form the iron coating layer is insufficient. Furthermore, when the reduction time is less than 30 seconds, the amount of reduction for reducing the iron oxide layer to form the iron coating layer is insufficient, and when it exceeds 200 seconds, there is a problem that productivity may rather decrease due to excessive time required.

Meanwhile, in the reduction step, O generated by reducing the iron oxide layer may combine with H2 in the reducing atmosphere to generate H2O, and at this time, the dew point may be formed within a high dew point range of -10°C to 0°C.

That is, in the method of manufacturing an ultra-high-strength galvanized steel sheet according to the present invention, the dew point is raised by the reduction step, so that the effect of silicon fixing oxygen as an oxide inside the steel material and suppressing the surface diffusion of silicon in the annealing heat treatment process to be described later can be further promoted.

The iron coating layer may have various thicknesses, and may have a thickness of, for example, 300 nm to 3 µm.

### ANNEALING HEAT TREATMENT STEP (S40)

In the annealing heat treatment step (S40), the cold-rolled steel sheet on which the iron coating layer has been formed is subjected to annealing heat treatment in a continuous annealing furnace having a conventional slow cooling section. In the annealing heat treatment step, by forming internal oxides having a mostly spherical shape at the interface between the steel sheet base material and the iron coating layer, the formation of oxides at the interface between the iron coating layer and the hot-dip galvanized layer can be suppressed.

The annealing heat treatment may be performed by heating at, for example, a heating rate of 1°C/s to 5°C/s, and maintaining at, for example, a temperature of 820°C to 900°C for 40 seconds to 200 seconds.

When the heating rate is less than 1°C/s, the annealing heat treatment process may not be performed because it does not reach the line speed at which the steel sheet is conveyed. When the heating rate exceeds 5°C/s, the diffusion of silicon, aluminum, and chromium, which have high oxidizability, may not be controlled.

When the annealing heat treatment temperature is less than 780°C, recrystallization may not occur sufficiently, and the desired physical properties may not be obtained. When the annealing heat treatment temperature exceeds 900°C, deterioration of the heat-resistant equipment of the annealing heat treatment furnace may occur.

When the annealing heat treatment time is less than 40 seconds, recrystallization may not occur sufficiently, and the desired physical properties may not be obtained. When the annealing heat treatment time exceeds 200 seconds, excessive cost increases may be incurred, and the diffusion of silicon, aluminum, and chromium, which have high oxidizability, may not be controlled.

After completion of the annealing heat treatment, a process of slow cooling at a cooling rate of 5°C/s to 10°C/s to a final temperature of 550°C to 750°C, and then rapid quenching at a cooling rate of 50°C/s or more to a final temperature of 180°C to 240°C may be carried out.

After the rapid quenching process, a tempering process of reheating at a reheating rate of 20°C/s or more within a temperature range of 380°C to 450°C for a holding time of 10 seconds or more may be carried out.

### HOT-DIP GALVANIZING STEP (S50)

In the hot-dip galvanizing step (S50), the cold-rolled steel sheet that has been subjected to annealing heat treatment is immersed in a hot-dip galvanizing bath to form a hot-dip galvanized layer on the surface of the iron coating layer, thereby manufacturing a hot-dip galvanized steel sheet. The temperature of the hot-dip galvanizing bath may vary depending on the type and ratio of alloying elements constituting the coating layer and the composition of the steel sheet base material (cold-rolled steel sheet), and may be, for example, 430°C to 480°C. Under the hot-dip galvanizing bath conditions, the hot-dip galvanized layer is easily formed on the surface of the iron coating layer, and the adhesion of the coating layer can be excellent. Subsequently, the hot-dip galvanized layer is wiped using nitrogen gas to control the amount of galvanizing bath adhering to the surface. The thickness of the hot-dip galvanized layer may be, for example, an average of 5 µm to 20 µm per side. The hot-dip galvanized layer may be formed with a coating weight of, for example, 35 g/m² to 150 g/m² per side. Within the range of the coating weight, anti-corrosion performance can be secured.

If necessary, the hot-dip galvanized layer can be solidified by cooling to room temperature, for example, to 10°C to 40°C, at a cooling rate of 1°C/s to 30°C/s, thereby completing the hot-dip galvanized steel sheet.

### ALLOYING HEAT TREATMENT STEP (S60)

In the alloying heat treatment step (S60), the hot-dip galvanized steel sheet on which the hot-dip galvanized layer has been formed is subjected to alloying heat treatment by maintaining it at, for example, a temperature of 500°C to 600°C for, for example, 10 seconds to 60 seconds, thereby manufacturing a galvannealed steel sheet. The alloying heat treatment step may be performed continuously after the preceding hot-dip galvanizing step without cooling. When alloying heat treatment is performed under the temperature conditions described above, the hot-dip galvanized layer grows stably, and the adhesion of the coating layer can be excellent. When the alloying heat treatment temperature is less than 500°C, alloying may not proceed sufficiently, and the soundness of the hot-dip galvanized layer may deteriorate. When the alloying heat treatment temperature exceeds 600°C, the temperature range may enter the two-phase region, causing a change in material properties. Subsequently, the galvannealed steel sheet can be manufactured by cooling to room temperature.

### EXPERIMENTAL EXAMPLES

Hereinafter, preferred experimental examples are presented to aid in understanding the present invention. However, the following experimental examples are only intended to aid in understanding the present invention, and the present invention is not limited by the following experimental examples.

Steel sheets having the compositions (unit: wt%) shown in Table 1 below were prepared, and the predetermined steps as described above were performed to prepare ultra-high-strength galvanized steel sheets. In the process of manufacturing the ultra-high-strength galvanized steel sheets of the following Examples and Comparative Examples, the remaining processes may be the same except for the conditions described in Table 2. The plating quality of the ultra-high-strength galvanized steel sheets was examined after hot-dip galvanizing and after alloying, respectively. In Table 1, the balance is iron (Fe) and unavoidable impurities.

**[Table 1]**

| Element | C | Si | Mn |
|---|---|---|---|
| Content (wt%) | 0.18 | 1.8 | 2.8 |

Table 2 is a table showing the characteristics of the ultra-high-strength galvanized steel sheet according to one embodiment of the present invention.

**[Table 2]**

| Classification | Applied Technology | Oxidation Temperature | Oxygen Concentration in Oxidation Process | Oxide Layer Thickness | Reduction Temperature | Dew Point in Reduction Process |
|---|---|---|---|---|---|---|
| Example 1 | Oxidation- | 650°C | 1.0% | 500 nm | 850°C | -10°C |
| | Reduction | | | | | |
| Example 2 | Oxidation-Reduction | 650°C | 3.0% | 900 nm | 850°C | -5°C |
| Example 3 | Oxidation-Reduction | 650°C | 5.0% | 1,200 nm | 850°C | +0°C |
| Comparative Example 1 | Oxidation-Reduction | 650°C | 0.2% | 100 nm | 850°C | -15°C |
| Comparative Example 2 | Oxidation-Reduction | 650°C | 6.0% | 1,500 nm | 850°C | +5°C |

| Classification | Internal Oxide Morphology | Major Axis/ Minor Axis Ratio | Spherical Oxide Fraction | | Surface Crack | Elongation Reduction Rate |
|---|---|---|---|---|---|---|
| Example 1 | Spherical oxidation | 2 to 3 | 90% or more | | None | 8% |
| Example 2 | Spherical oxidation | 1 to 2 | 90% or more | | None | 7% |
| Example 3 | Spherical oxidation | 1 to 2 | 80% | | None | 7% |
| Comparative Example 1 | Continuous grain boundary oxidation | 6 to 10 | 20% | | Present | 40% |
| Comparative Example 2 | Spherical oxidation + | 1 to 2 + 6 to 10 | 50% | | Present | 28% |
| | | continuous grain boundary oxidation | | | | |

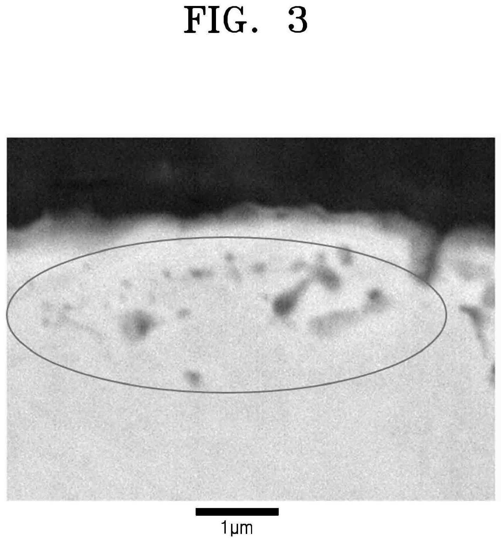

FIG. 3 is a photograph showing the morphology of internal oxides in the ultra-high-strength galvanized steel sheet according to one embodiment of the present invention.

Referring to Table 2, it can be confirmed that, in Examples 1 to 3, internal oxides having a spherical morphology with a major axis/minor axis ratio of 3.0 or less constitute the majority, accounting for 80% or more of the total internal oxides. Furthermore, referring to FIG. 3, it is confirmed that most of the internal oxides formed are of a spherical morphology, as particularly observed within the marked region of FIG. 3.

On the other hand, referring to Table 2, in Comparative Example 1, the oxidation process was carried out under an oxygen concentration of 0.2 vol%, which is less than 0.5 vol% in the oxidizing atmosphere, resulting in the formation of an iron oxide layer of negligible thickness. Accordingly, the thickness of the iron coating layer subsequently formed by the reduction process was likewise negligibly thin, so that oxygen did not infiltrate along the surface area of the interface between the steel sheet base material and the iron coating layer, and as a result, it can be confirmed that the internal oxides were formed linearly along the grain boundaries.

In Comparative Example 2, the oxidation process was carried out under an oxygen concentration of 6 vol%, which exceeds 5.0 vol% in the oxidizing atmosphere, and it can be confirmed that, due to the excessive amount of oxidation, unnecessary oxides in addition to spherical internal oxides - that is, internal oxides formed continuously along the grain boundaries - may also be formed.

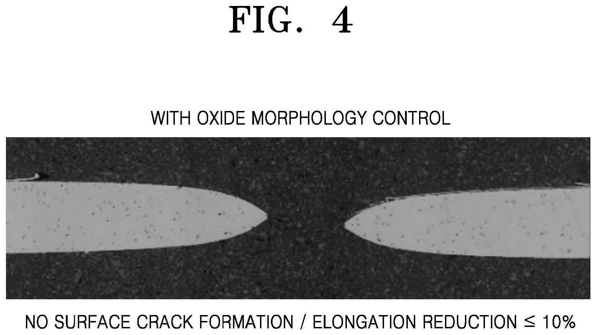

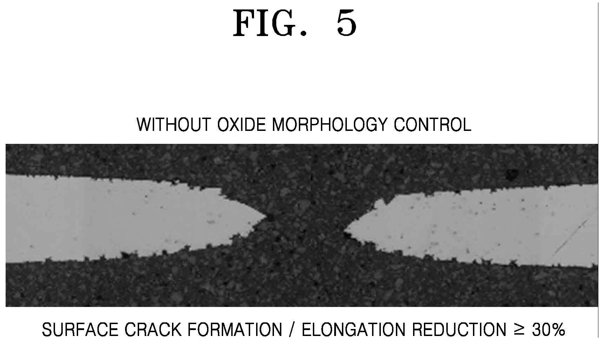

FIG. 4 is a photograph showing whether cracks caused by liquid metal embrittlement (LME) occur in the ultra-high-strength galvanized steel sheet according to one embodiment of the present invention, and FIG. 5 is a photograph showing the pattern of crack formation caused by liquid metal embrittlement (LME) in the galvanized steel sheet according to a comparative example of the present invention.

More specifically, FIGS. 4 and 5 are cross-sectional photographs of the fractured portions of the respective steel sheets taken after a high-temperature tensile test, in order to confirm whether liquid metal embrittlement cracks occur inside the steel sheets.

Referring to FIG. 4 together with Table 2, it can be confirmed that, in Examples 1 to 3, no liquid metal embrittlement cracks occur on the surface of the steel sheet, and the elongation reduction rate is 10% or less, demonstrating an improvement in elongation characteristics.

On the other hand, referring to FIG. 5 together with Table 2, it can be confirmed that, in Comparative Examples 1 and 2, liquid metal embrittlement cracks occur on the surface, resulting in an elongation reduction rate of approximately 30% or greater, indicating a deterioration in elongation.

More specifically, in Comparative Example 1, as described above, an iron oxide layer of negligible thickness was formed, and the thickness of the iron coating layer subsequently formed by the reduction process was likewise negligibly thin, so that the internal oxides were formed linearly along the grain boundaries. In Comparative Example 2 as well, internal oxidation along the grain boundaries occurred due to the excessive amount of oxidation, and this is analyzed to have caused liquid metal embrittlement cracks during spot welding.

It will be apparent to those skilled in the art to which the technical concept of the present invention pertains that the technical concept of the present invention described above is not limited to the foregoing embodiments and the accompanying drawings, and that various substitutions, modifications, and alterations are possible without departing from the scope of the technical concept of the present invention.

## Claims

1. An ultra-high-strength galvanized steel sheet having excellent weldability, comprising:
a steel sheet base material comprising, in weight percent, from 0.1% to 0.3% of carbon (C), from 1.0% to 2.0% of silicon (Si), from 2.5% to 3.5% of manganese (Mn), at most 0.05% of aluminum (Al) (including 0%), at most 1.0% of chromium (Cr) (including 0%), at most 0.2% of molybdenum (Mo) (including 0%), at most 0.05% of titanium+niobium+vanadium (Ti+Nb+V) (including 0%), and the balance being iron (Fe) and unavoidable impurities;
an iron coating layer formed on a surface of the steel sheet base material; and
a hot-dip galvanized layer formed on a surface of the iron coating layer,
wherein internal oxides are formed at an interface between the steel sheet base material and the iron coating layer, thereby suppressing formation of oxides at an interface between the iron coating layer and the hot-dip galvanized layer, and wherein the internal oxides are of a spherical form.

2. The ultra-high-strength galvanized steel sheet having excellent weldability of claim 1, wherein the internal oxides comprise, at a volume fraction of at least 80% of the total internal oxides, spherical internal oxides having a major axis/minor axis ratio of 3.0 or less.

3. The ultra-high-strength galvanized steel sheet having excellent weldability of claim 1, wherein the iron coating layer comprises a clean zone, extending from the interface with the hot-dip galvanized layer, in which no oxides are formed.

4. The ultra-high-strength galvanized steel sheet having excellent weldability of claim 1, wherein the steel sheet has a yield strength (YP) of from 850 MPa to 1070 MPa, a tensile strength (TS) of at least 1180 MPa, and an elongation (T.EL) of at least 14%, and wherein the steel sheet comprises a mixed microstructure in which ferrite, retained austenite, and a mixture of hard phase martensite and tempered martensite are mixed, a fraction of the ferrite ranges from 10% to 20%, and a fraction of the retained austenite ranges from 5% to 20%.

5. The ultra-high-strength galvanized steel sheet having excellent weldability of claim 1, wherein the steel sheet base material further comprises at least one of, in ppm, at most 30 ppm of boron (B) (including 0), at most 200 ppm of phosphorus (P) (including 0), at most 50 ppm of sulfur (S) (including 0), and at most 60 ppm of nitrogen (N) (including 0).

6. A method of producing an ultra-high-strength galvanized steel sheet having excellent weldability, the method comprising:
producing a hot-rolled steel sheet using a steel sheet base material comprising, in weight percent, from 0.1% to 0.3% of carbon (C), from 1.0% to 2.0% of silicon (Si), from 2.5% to 3.5% of manganese (Mn), at most 0.05% of aluminum (Al) (including 0%), at most 1.0% of chromium (Cr) (including 0%), at most 0.2% of molybdenum (Mo) (including 0%), at most 0.05% of titanium+niobium+vanadium (Ti+Nb+V) (including 0%), and the balance being iron (Fe) and unavoidable impurities;
cold rolling the hot-rolled steel sheet to produce a cold-rolled steel sheet;
forming an iron coating layer on a surface of the cold-rolled steel sheet;
performing an annealing heat treatment on the cold-rolled steel sheet; and
immersing the annealing heat-treated cold-rolled steel sheet in a hot-dip galvanizing bath to form a hot-dip galvanized layer on a surface of the iron coating layer, thereby producing a hot-dip galvanized steel sheet,
wherein the forming of the iron coating layer on the surface of the cold-rolled steel sheet comprises:
an oxidation step in which the cold-rolled steel sheet is exposed to an oxidizing atmosphere containing an oxygen content so as to form an iron oxide layer on the surface of the cold-rolled steel sheet; and
a reduction step in which the cold-rolled steel sheet having the iron oxide layer formed on its surface is exposed to a reducing atmosphere containing H₂ so as to reduce the iron oxide layer,
wherein the oxidation step comprises a step in which internal oxides are formed at an interface between the steel sheet base material and the iron oxide layer, and
wherein the internal oxides are of a spherical form.

7. The method of producing an ultra-high-strength galvanized steel sheet having excellent weldability of claim 6, wherein a dew point of H₂O generated by combination of O produced by reduction of the iron oxide layer and H₂ in the reducing atmosphere is formed at from -10°C to 0°C.

8. The method of producing an ultra-high-strength galvanized steel sheet having excellent weldability of claim 6, wherein in the oxidation step, an oxidation zone having an oxidation temperature of from 400°C to 900°C is established, and the cold-rolled steel sheet is exposed to an oxidizing atmosphere containing from 0.5 vol% to 5.0 vol% of oxygen for from 10 seconds to 120 seconds, and
wherein in the reduction step, a reduction zone having a reduction temperature of from 750°C to 900°C is established, and the cold-rolled steel sheet having the iron oxide layer formed on its surface is exposed to a reducing atmosphere containing at least 3 vol% of H2 for from 30 seconds to 200 seconds.

9. The method of producing an ultra-high-strength galvanized steel sheet having excellent weldability of claim 6, wherein the internal oxides comprise, at a volume fraction of at least 80% of the total internal oxides, spherical internal oxides having a major axis/minor axis ratio of 3.0 or less.

10. The method of producing an ultra-high-strength galvanized steel sheet having excellent weldability of claim 6, wherein the iron coating layer comprises a clean zone, extending from the interface with the hot-dip galvanized layer, in which no oxides are formed.

11. The method of producing an ultra-high-strength galvanized steel sheet having excellent weldability of claim 6, wherein the ultra-high-strength galvanized steel sheet having excellent weldability produced by the method has a yield strength (YP) of from 850 MPa to 1070 MPa, a tensile strength (TS) of at least 1180 MPa, and an elongation (T.EL) of at least 14%, and
wherein the ultra-high-strength galvanized steel sheet comprises a mixed microstructure in which ferrite, retained austenite, and a mixture of hard phase martensite and tempered martensite are mixed, a fraction of the ferrite ranges from 10% to 20%, and a fraction of the retained austenite ranges from 5% to 20%.

12. The method of producing an ultra-high-strength galvanized steel sheet having excellent weldability of claim 6, wherein the steel sheet base material further comprises at least one of, in ppm, at most 30 ppm of boron (B) (including 0), at most 200 ppm of phosphorus (P) (including 0), at most 50 ppm of sulfur (S) (including 0), and at most 60 ppm of nitrogen (N) (including 0).

13. The method of producing an ultra-high-strength galvanized steel sheet having excellent weldability of claim 6, wherein the producing of the cold-rolled steel sheet comprises a softening heat treatment step performed in a temperature range of from 500°C to 700°C.

14. The method of producing an ultra-high-strength galvanized steel sheet having excellent weldability of claim 6, wherein the annealing heat treatment step is performed by heating at a heating rate of from 1°C/second to 5°C/second and maintaining at a temperature of from 820°C to 900°C for from 40 seconds to 200 seconds.

15. The method of producing an ultra-high-strength galvanized steel sheet having excellent weldability of claim 6, further comprising:
subjecting the hot-dip galvanized steel sheet to an alloying heat treatment to produce a galvannealed steel sheet.
